# EUROPÄISCHE PATENTANMELDUNG

(11) **EP 0 794 597 A1**
(43) Veröffentlichungstag der Anmeldung: **10.09.1997**
(21) Anmeldenummer: 97102753.7
(22) Anmeldetag: 20.02.1997
(51) Int. Cl.: H01R 43/052

(54) **Vorrichtung zur automatischen Herstellung von wenigstens einseitig mit Kabelendstücken versehenen Kabeln**

(30) Priorität: 09.03.1996 DE 19603326
(71) Anmelder: Riempp, Friedrich, 72644 Oberboihingen (DE)
(72) Erfinder: Riempp, Friedrich, 72644 Oberboihingen (DE)
(74) Vertreter: Vetter, Hans, Dipl.-Phys. Dr.

(57) **Zusammenfassung**

Es wird eine Vorrichtung zur automatischen Herstellung von wenigstens einseitig mit Kabelendstücken versehenen Kabeln vorgeschlagen. Wenigstens einem Halte- und Schwenkkopf (23, 24) wird Kabelmaterial mittels einer Kabelzuführungseinrichtung (19) zugeführt. Seitlich der Bewegungsbahn (17) des Kabelmaterials ist wenigstens eine Crimp-Einrichtung (25, 26) zum Anbringen der Kabelendstücke an das jeweilige, durch den Halte- und Schwenkkopf (23, 24) zu dieser Crimp-Einrichtung (25. 26) hin geschwenkte Kabelende angeordnet. Weiterhin sind an der Bewegungsbahn (17) eine Ablängeinrichtung zum Abschneiden des durch die Kabelzuführungseinrichtung (19) entsprechend der gewünschten Kabellänge weitertransportieren Kabelmaterials sowie eine Längenmeßeinrichtung (20) für das entlang der Bewegungsbahn (17) zugeführte Kabelmaterial vorgesehen. Durch diese Vorrichtung können vollautomatisch mit Kabelendstücken versehene Kabel insbesondere computergesteuert in variabler Weise hergestellt werden.

## Beschreibung

Die Erfindung betrifft eine Vorrichtung zur automatischen Herstellung von wenigstens einseitig mit Kabelendstücken versehenen Kabeln, wie sie beispielsweise zur Verkabelung der elektrischen Komponenten von elektrischen Schaltschränken oder ähnlichen Schaltungsanordnungen benötigt werden.

Die Verkabelung beispielsweise von elektrischen Schaltschränken erfolgt heutzutage weitgehend manuell, das heißt, die ortsfest beispielsweise in einem Schaltschrank fixierten elektrischen Komponenten werden anhand eines Verdrahtungsplans miteinander verbunden und angeschlossen. Hierzu stellt der Elektromonteur beispielsweise fest, daß von einer ersten Komponente zu einer dritten Komponente vier Kabel verlegt werden müssen, beispielsweise ein rotes, ein blaues, ein grünes und ein gelbes, wobei gegebenenfalls auch unterschiedliche Leiterquerschnitte benötigt werden. Diese Kabel stellt er dann nacheinander her, indem er entsprechendes Kabelmaterial ablängt und die so gebildeten Einzelkabel an den Enden abisoliert und mit erforderlichen Kabelendstücken versieht. Die Anpassung der jeweiligen Kabellängen an die örtlichen Gegebenheiten, Kabelkanäle usw. ist oft mühsam und zeitaufwendig, und die einzelnen Kabel müssen im Hinblick auf eventuelle spätere Änderungen oder Reparaturen einzeln gekennzeichnet werden. Schon die Erstellung des Verdrahtungsplans ist mühsam und aufwendig.

Eine Aufgabe der vorliegenden Erfindung besteht daher darin, eine Vorrichtung zur Herstellung von Kabeln zu schaffen, bei der die Kabel in der gewünschten Ausführung automatisch und ohne manuelle Tätigkeit hergestellt werden können.

Diese Aufgabe wird erfindungsgemäß dadurch gelöst, daß wenigstens ein Halte- und Schwenkkopf vorgesehen ist, dem Kabelmaterial mittels einer Kabelzuführungseinrichtung zugeführt wird, daß seitlich zur Bewegungsbahn des Kabelmaterials durch die Vorrichtung wenigstens eine Crimp-Einrichtung zum Anbringen der Kabelendstücke an das jeweilige, durch den Halte- und Schwenkkopf zu dieser Crimp-Einrichtung hin geschwenkte Kabel ende angeordnet ist und daß an der Bewegungsbahn weiterhin eine Ablängeinrichtung zum Abschneiden des durch die Kabelzuführungseinrichtung entsprechend der gewünschten Kabellänge weitertransportierten Kabelmaterials sowie eine Längenmeßeinrichtung für das entlang der Bewegungsbahn geführte Kabelmaterial vorgesehen sind.

Die erfindungsgemäße Vorrichtung hat den Vorteil, daß die gewünschten Kabel nach Vorgabe der gewünschten Kabellänge vollautomatisch hergestellt werden, wobei insbesondere auch erforderliche Kabelendstücke automatisch angebracht werden. Die Vorrichtung arbeitet praktisch kontinuierlich, das heißt, Kabelmaterial wird auf einer Seite kontinuierlich der Vorrichtung zugeführt, während auf der anderen Seite fertige Kabel in der gewünschten Länge entnehmbar sind. Zur Bestückung beispielsweise eines Schaltschranks werden beispielsweise die erforderlichen Kabelarten und -längen manuell oder automatisch erfaßt und der erfindungsgemäßen Vorrichtung eingegeben, woraufhin dann die gewünschten Kabel automatisch hergestellt werden. Bei verschiedenen Kabelfarben und/oder -querschnitten erfolgt die Umstellung von der einen auf die andere Sorte entweder manuell oder vollautomatisch über einen entsprechend gesteuerten Kabelspeicher. Im letzteren Falle müssen selbstverständlich auch die entsprechenden Farb- und Querschnittsinformationen in eine entsprechende elektronische Steuervorrichtung eingegeben werden.

Durch die in den Unteransprüchen aufgeführten Maßnahmen sind vorteilhafte Weiterbildungen und Verbesserungen der im Anspruch 1 angegebenen Vorrichtung möglich.

Die Kabelzuführungseinrichtung besitzt zweckmäßigerweise eine den Halte- und Schwenkkopf in der Bewegungsbahn vorgeschaltete Vorschubeinrichtung für das Kabelmaterial, die vorzugsweise das Kabelmaterial umgreifende, von einer Antriebseinrichtung angetriebene Transporträder oder -bänder besitzt. Durch diese Vorschubeinrichtung kann das Kabelmaterial in der gewünschten Weise in die Bearbeitungspositionen geführt und gegebenenfalls auch dort gehalten werden.

Um eine exakte Zuführung und Längenmessung zu erreichen, ist der Längenmeßeinrichtung oder dem Halte- und Schwenkkopf eine Kabelrichtstrecke zur linearen Ausrichtung des Kabelmaterials vorgeschaltet.

Um Kabelendstücke an beiden Kabelenden in einfacher Weise anbringen zu können, ist in vorteilhafter Weise ein zweiter Halte- und Schwenkkopf dem ersten Halte- und Schwenkkopf in der Bewegungsbahn nachgeschaltet, wobei zum Anbringen von Kabelendstücken am jeweils anderen Kabel ende eine zweite Crimp-Einrichtung neben der Bewegungsbahn im Schwenkbereich des zweiten Halte- und Schwenkkopfes insbesondere an der gegenüber der ersten Crimp-Einrichtung gegenüberliegenden Seite angeordnet ist. Die wenigstens eine Crimp-Einrichtung ist dabei jeweils schräg zur Bewegungsbahn für das Kabelmaterial angeordnet, um die Kabel biegung beim Anbringen der Kabelendstücke möglichst gering zu halten.

Die Ablängeinrichtung ist zweckmäßigerweise im zweiten Halte- oder Schwenkkopf integriert oder neben diesem angeordnet, so daß das Kabelmaterial nach dem Anbringen eines Kabelendstückes am vorderen Ende vor dem Anbringen des anderen Kabelendstückes mit Hilfe des zweiten Halte- oder oder Schwenkkopfes in der gewünschten Länge abgeschnitten werden kann.

Wenigstens ein Halte- oder Schwenkkopf, insbesondere der zweite Halte- oder Schwenkkopf, ist zweckmäßigerweise mit einer Abisoliereinrichtung für die Kabel enden versehen, die dadurch vor dem Anbringen der Kabelendstücke in der erforderlichen Weise abisoliert werden können.

Um auch eine automatische Herstellung von Kabeln mit unterschiedlichen Kabelendstücken zu ermöglichen, ist die wenigstens eine Crimp-Einrichtung mit einer Speichereinrichtung für unterschiedliche Kabelendstücke versehen, wobei eine elektronische Steuerung gewährleistet, daß die jeweils gewünschten Kabelendstücke angebracht werden.

Ausgangsseitig besitzt die erfindungsgemäße Vorrichtung vorzugsweise eine Rinne oder einen separaten Speicher zum Ablegen der fertigen Kabel. Falls bestimmte Kabel, die nacheinander zu fertigen sind, automatisch zu Bündeln zusammengefaßt werden sollen, so ist eine Kabelbündelungseinrichtung der Rinne oder dem separaten Speicher zur Bildung von Kabelbündeln aus einer vorbestimmten Anzahl und Art von fertigen Kabeln zugeordnet.

Um auf einfache Weise während des Arbeitsablaufs die Kabel markieren zu können, ist seitlich an der Bewegungsbahn eine Druck- oder Prägeeinrichtung für Kabelbezeichnungen angeordnet, durch die die Kabel während der Vorbeibewegung automatisch gekennzeichnet werden können.

Zur automatischen Steuerung des Arbeitsablaufs besitzt die erfindungsgemäße Vorrichtung in vorteilhafter Weise einen Rechner, insbesondere einen PC, durch den in Abhängigkeit der Vorgaben die automatische Steuerung des wenigstens einen Halte- und Schwenkkopfs, der wenigstens einen Crimp-Einrichtung, der Kabelzuführungseinrichtung und der Ablängeinrichtung in Abhängigkeit der Meßwerte der Längenmeßeinrichtung erfolgt.

Der Herstellungsprozeß für die Kabel läßt sich noch weiter dadurch automatisieren, daß der Rechner mit einer Eingabeeinrichtung für CAD-Darstellungen von mit Kabeln und/oder Kabelbündeln zu versehen den Anordnungen von elektrischen Komponenten oder entsprechend bestückten Schaltschränken versehen ist, daß Mittel zur optimierten Berechnung der Anzahl und Längen und vorzugsweise auch der Art der jeweils erforderlichen Kabel oder Kabelbündel vorgesehen sind und daß Mittel zur automatischen Steuerung des Arbeitsablaufs in Abhängigkeit der vorgenommenen Berechnung vorgesehen sind. Mit Hilfe der ohnehin üblicherweise zu erstellenden CAD-Darstellung der zu bestückenden Gesamtanordnung, die dem Rechner eingegeben wird, kann dieser dann automatisch die optimale Leitungsführung festlegen und die Längen der erforderlichen Kabel berechnen. Auf Grund dieser Berechnung erfolgt dann der automatisch gesteuerte Arbeitsablauf zur Herstellung der entsprechenden Kabel. Hierbei werden auch automatisch Vorgaben für herzustellende Kabelbündel gemacht, die aus Einzelkabeln mit entsprechendem Kabelvorlauf bestehen, wobei dann der Rechner automatisch den Arbeitsablauf entsprechend steuert.

Um den Berechnungsvorgang noch genauer zu machen, ist in vorteilhafter Weise eine Speichereinrichtung für Daten über Dimensionierungen und/oder Anschlußkonfigurationen der verschiedenen elektrischen Komponenten zur Berücksichtigung bei der Berechnung der Kabel vorgesehen. Auf Grund dieser gespeicherten Daten kann dann die CAD-Darstellung automatisch korrigiert werden, wenn die einzelnen Blöcke als solche gespeicherte Komponenten gekennzeichnet sind.

Zur Überprüfung und Überwachung des Arbeitsablaufs ist zweckmäßigerweise eine Ausgabeeinrichtung für Listen der zu fertigenden Kabel und/oder Kabelbündel mit entsprechenden Längen- und Spezifizierungsangaben vorgesehen, um beispielsweise die hergestellten Kabel und Kabelbündel mit den Vorgaben vergleichen zu können.

Ein Ausführungsbeispiel der Erfindung ist in der Zeichnung dargestellt und in der nachfolgenden Beschreibung näher erläutert. Es zeigen:
- Fig. 1: eine Vorrichtung zur automatischen Herstellung von Kabeln in der Draufsicht als Ausführungsbeispiel der Erfindung und
- Fig. 2: eine Teildarstellung eines mit Kabeln zu versehenden Schaltschranks.

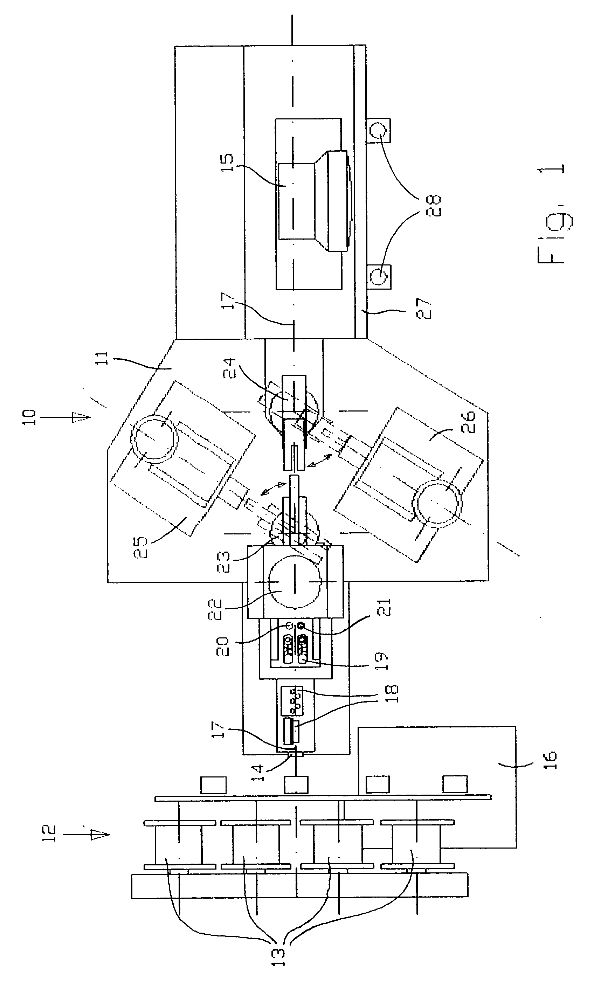

Bei dem in Fig. 1 dargestellten Ausführungsbeispiel besteht eine Maschine 10 zur automatischen Herstellung von Kabeln im wesentlichen aus einem Maschinenkörper 11, dem von der linken Seite her zu verarbeitendes Kabelmaterial zugeführt wird. Dieses Kabelmaterial ist in einem Kabelspeicher 12 auf Vorratsrollen 13 angeordnet, die jeweils ein unterschiedliches Kabelmaterial enthalten, das heißt Kabelmaterial mit unterschiedlichen Leiterquerschnitten und unterschiedlich eingefärbter Isolierung. Das gewünschte Kabelmaterial wird manuell oder automatisch einer Einführöffnung 14 der Maschine 10 zugeführt. Bei der automatischen Zuführung wird das jeweils gewünschte Kabelmaterial durch einen Computer 15, der beispielsweise als PC ausgebildet ist, vorgewählt, wobei dann ein nur schematisch dargestellter Kabelzuführungsautomat 16 das freie Ende des ausgewählten Kabelmaterials ergreift und in die Einführungsöffnung 14 einführt. Bei einer einfacheren Ausführung kann anstelle des Kabelspeichers 12 auch nur eine Haltevorrichtung für eine Vorratsrolle 13 vorgesehen sein, und das Kabelmaterial wird dann manuell der Einführungsöffnung 14 zugeführt. Innerhalb der Maschine 10 folgt das zu bearbeitende Kabelmaterial einer Bewegungsbahn 17. Zunächst durchläuft es eine Kabelrichtstrecke 18, wo es linear ausgerichtet wird. Dann gelangt es zu einer Vorschubeinrichtung 19, über die die weiteren Bewegungen des Kabelmaterials in der Bewegungsbahn 17 bestimmt werden. Diese Vorschubeinrichtung 19 besteht beispielsweise aus zwei jeweils endlos umlaufenden Transportraupen, die von zwei entgegengesetzten Seiten her das Kabelmaterial umgreifen. Zum Antrieb dient beispielsweise ein bürstenloser Servomotor mit einem Anti-Schlupf-System. Anstelle von Transportraupen bzw. Transportbändern können auch beispielsweise Transportrollen bzw. Antriebsrollen treten.

Der Vorschubeinrichtung 19 in der Bewegungsrichtung nachgeschaltet ist eine Längenmeßeinrichtung 20. Diese enthält einen Drehgeber 21, an dem das Kabelmaterial vorbeigeführt wird und diesen antreibt. Der Drehgeber 21 hat beispielsweise eine Auflösung von 0,1 mm.

Über der Bewegungsbahn 17 ist dann in der Bewegungsrichtung nachfolgend eine Druck- oder Prägeeinrichtung 22 angeordnet, die dem vorbeigeführten Kabelmaterial die vorgesehene bzw. gewünschte Kabelbezeichnung aufdruckt oder aufprägt. Das Aufbringen einer solchen Beschriftung wird wiederum vom Computer 15 gesteuert.

In der Bewegungsrichtung nachfolgend wird das Kabelmaterial dann in einen ersten Halte- oder Schwenkkopf 23 eingeführt. In diesem Halte- oder Schwenkkopf 23 wird das Kabelmaterial dann festgehalten, wobei das überstehende freie Kabelende von einem in der Bewegungsrichtung nachgeschalteten zweiten Halte- oder Schwenkkopf 24 abisoliert wird. Danach erfolgt ein Schwenkvorgang durch den ersten Halte- oder Schwenkkopf 23 nach links, wodurch das abisolierte freie Ende des Kabelmaterials einer ersten Crimp-Einrichtung 25 zugeführt wird. Diese erste Crimp-Einrichtung 25 ist schräg zur Bewegungsbahn angeordnet, so daß lediglich ein Schwenkwinkel von beispielsweise 45° erforderlich ist. Durch die erste Crimp-Einrichtung 25 wird das freie Kabelende mit einem Kabelendstück versehen. Derartige Kabelendstücke bzw. -hülsen befinden sich in einer nicht näher dargestellten Speichereinrichtung der ersten Crimp-Einrichtung 25. Es ist auch möglich, in dieser Speichereinrichtung unterschiedliche Ausführungen von Kabelendstücken unterzubringen, die dann computergesteuert je nach Art des gewünschten Kabels am Kabelende befestigt werden. Derartige Crimp-Einrichtungen sind an sich bekannt. Anschließend wird das mit einem Kabelendstück versehene Kabelende wieder in die Bewegungsbahn 17 zurückgeschwenkt.

Nun erfolgt ein weiterer Vorschub des Kabelmaterials durch die Vorschubeinrichtung 19, wobei die Vorschublänge durch die gewünschte Kabellänge bestimmt ist, die vom Computer 15 vorgegeben wird. Nach einem solchen längenabhängigen Vorschubvorgang wird dann das Kabelmaterial im zweiten Halte- oder Schwenkkopf 24, der als Multifunktionskopf ausgebildet ist, festgehalten, abgelängt bzw. abgeschnitten, abisoliert und dann in einer entsprechenden Weise einer zweiten Crimp-Einrichtung 26 zugeführt, durch die das andere Ende des durch den Abschneidevorgang gebildeten Kabels mit einem Kabelendstück versehen wird. Auch diese zweite Crimp-Einrichtung 26 ist schräg zur Bewegungsbahn 17 angeordnet und weist eine entsprechende Speichereinrichtung für Kabelendstücke bzw. -hülsen auf.

Es ist selbstverständlich auch möglich, eine vom zweiten Halte- oder Schwenkkopf 24 separate Abläng- bzw. Schneideeinrichtung vorzusehen. Weiterhin kann auch eine separate Abisoliereinrichtung im Schwenkbereich der Halte- oder Schwenkköpfe 23, 24 vorgesehen sein, oder jeder der beiden Halte- oder Schwenkköpfe 23, 24 besitzt eine eigene Abisoliereinrichtung. Um die einzelnen Arbeitsvorgänge durchführen zu können, kann die Vorschubeinrichtung 19 bei Bedarf auch Vorwärts- und Rückwärtsbewegungen durchführen.

Nach dem Crimpvorgang durch die zweite Crimp-Einrichtung 26 schwenkt der zweite Halte- oder Schwenkkopf 24 das bearbeitete zweite Kabelende wieder in die Bewegungsbahn 17 zurück. Das nun fertige Kabel wird in einer Rinne 27 abgelegt. Hierfür kann eine separate Vorschub- oder Antriebseinrichtung vorgesehen sein, oder das fertige Kabel wird bei der Bearbeitung des nächsten Kabels durch dieses in der Bewegungsrichtung vorgeschoben und rutscht oder fällt dann seitlich in diese Rinne 27 oder eine andere Ausführung des Kabelspeichers.

Der Computer 15 kann auch Vorgaben oder Steuerdaten enthalten, gemäß denen eine bestimmte Anzahl von Kabeln gleicher oder unterschiedlicher Ausführung zu einem Kabelbündel zusammengefaßt werden sollen. Bei einer solchen Vorgabe werden zunächst die einzelnen Kabel dieses Kabelbündels nacheinander hergestellt, so daß sie am Ende dieses Prozesses gemeinsam in der Rinne 27 liegen. Danach wird durch den Comuputer 15 eine Kabelbündlungseinrichtung 28 so gesteuert, daß die Kabel zu einem Kabelbündel zusammengefaßt werden, beispielsweise dadurch, daß durch zwei oder mehr Greifer Bündelungselemente um die Kabel herumgelegt und fixiert werden. Danach kann das Kabelbündel aus der Rinne 27 entnommen werden.

Die beschriebene Maschine 10 kann selbstverständlich auch einfacher realisiert werden, wobei einzelne jeweils nicht benötigte Komponenten dann nicht vorgesehen sind. So kann beispielsweise die Druck- oder Prägeeinrichtung 22 entfallen, oder es sind nur ein Halte- oder Schwenkkopf und nur eine Crimp-Einrichtung vorgesehen, wenn die Kabel nur auf einer Seite mit Kabelendstücken versehen werden müssen.

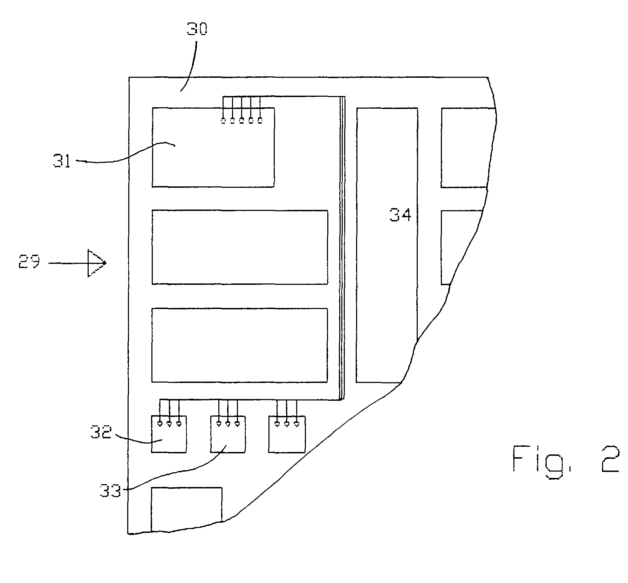

Die beschriebene Maschine 10 eignet sich zur Herstellung von Kabeln und/oder Kabelbündeln, die beispielsweise zur Verkabelung der elektrischen Komponenten eines Schaltschranks oder einer anderen Anordnung von elektrischen Komponenten geeignet sind. Ein solcher Schaltschrank 29 ist in Fig. 2 ausschnittsweise dargestellt. Auf einer Grundplatte 30 sind elektrische Komponenten in bestimmter Weise angeordnet, wie Relais, Spannungswandler, Umsetzer, Sicherungen, Anzeigegeräte, Steuerungskomponenten u.dgl. Zunächst wird ein Schaltplan erstellt, und dann wird üblicherweise die geometrische Anordnung der elektrischen Komponenten in einer CAD-Zeichnung festgelegt. Diese elektrischen Komponenten müssen dann gemäß dem Schaltplan in einer bestimmten Weise miteinander verkabelt werden. Gemäß Fig. 2 muß beispielsweise die elektrische Komponente 31 in der linken oberen Ecke mit zwei kleineren Komponenten 32, 33 mit Hilfe von sechs Kabeln verbunden werden, die zu einem Kabelbündel zusammengefaßt sind. In ähnlicher Weise müssen (nicht dargestellt) auch die übrigen Komponenten in einer bestimmten Weise elektrisch miteinander verbunden werden. Auf der CAD-Zeichnung werden die Kabelverbindungen nicht im einzelnen eingezeichnet, dafür werden miteinander zu verbindende Anschlüsse von Komponenten entsprechend gekennzeichnet. Das jeweils zwischen zwei Anschlüssen erforderliche Kabel trägt dann eine den Anschlüssen entsprechende Bezeichnung oder eine aus den Klemmenbezeichnungen abgeleitete Bezeichnung. Die jeweilige Farbe des Kabels wird durch die Klemmenbezeichnungen oder auf andere Weise vorgegeben. Eine solche CAD-Zeichnung wird nun dem Computer 15 eingegeben. Er entnimmt aus den Zeichnungen die folgenden Daten: Positionen der Kontakte (Kabelenden), Lage und Verlauf der Kabelkanäle zwischen den Komponenten, Rauminformationen (Tiefe des Schrankes), Kabelbezeichnungen, Kabelquerschnitte, Kabelart und Farbe. Für die Gewinnung der Daten gibt es verschiedene Möglichkeiten. Entweder enthalten die CAD-Dateien bereits sämtliche Daten, oder es werden sogenannte Exportdateien verwendet. Hier werden einzelne Layer der Zeichnung in eine Extra-Datei exportiert, wobei nach Möglichkeit die einzelnen Datenarten in getrennten Dateien abgelegt werden, z. B. Positionsdaten der Komponenten, Positionen der Kontakte und die Kabeldaten. Jedes CAD-System kann auch Positionslisten der einzelnen Komponenten, Stücklisten und Koordinatenlisten erstellen. Diese Listen sind nicht mehr codiert, sondern liegen in einer lesbaren Textform vor, die auf eine einfachere Weise analysiert werden kann. Hier muß für jedes System ein eigener Konverter erstellt werden. Die Realisierung ist einfacher als die der zuvor beschriebenen Möglichkeiten.

Nun wird in einem Optimiervorgang aus den vorhandenen Daten des oder der Konverter und/oder der Datenbanken eine ablaufoptimierte Schneidliste für die herzustellenden Kabel erstellt. Bei der Optimierung können auch die folgenden Daten berücksichtigt werden: Anzahl der Kabel je Koordinate, Art des Kabels, Querschnitt des Kabels, physikalische Belastbarkeit des Kabels, Anzahl der Kabel je Wegabschnitt, räumliche Lage der Kontakte und Signalart des Kabels. Aus den vorhandenen Daten werden dann die Kabellängen eventuell mit Wege- und Montagezuschlägen berechnet. Im Anschluß erfolgt dann die Erstellung der Schneidlisten. Diese können über einen Drucker ausgegeben werden, um eine Übersicht über die zu erstellenden Kabel zu gewinnen. Weiterhin berechnet der Computer die optimale Schnittreihenfolge. Weiterhin sind auch die Längen des Kabelmaterials auf den einzelnen Vorratsrollen 13 gespeichert, so daß signalisiert werden kann, wenn ein Kabelmaterial zur Neige geht oder wenn ein Kabelmaterial nicht für den herzustellenden Kabelsatz ausreicht. Für jedes angefertigte Kabel wird in der Datenbank für den Schaltschrank ein Datensatz erstellt, in dem die gesamte Dokumentation des Kabels hinterlegt ist. So ist es möglich, eine komplette Dokumentation des Schaltschranks zu erstellen. Dies ist vor allem dann wichtig, wenn zu einem späteren Zeitpunkt ein Kabel ersetzt werden muß.

Die einzelnen Daten der jeweiligen Komponenten können fest im Computer gespeichert sein oder bei Bedarf eingegeben werden. Sie können zur Korrektur des CAD-Datensatzes herangezogen werden, wenn dort bespielsweise eine einzelne Komponente mit der entsprechenden Bezeichnung falsch dimensioniert oder mit einer fehlerhaften Anschlußkonfiguration versehen ist. Nach einer solchen Korrektur muß gegebenenfalls eine neue Anordnung von Komponenten gewählt werden.

In Abhängigkeit der berechneten Daten steuert der Computer 15 dann die Maschine 10 in dem Sinne, daß die festgelegte Zahl von verschiedenartigen oder zum Teil auch gleichen Kabeln hergestellt wird. Da im Computer auch Kabelbündel berechnet werden können, wie das Kabelbündel 34 gemäß Fig. 2, können mit Hilfe der Kabelbündelungseinrichtung 28 auch computergesteuert die fertigen Kabelbündel hergestellt werden.

Neben den eigentlichen Schnittplänen für die Maschine 10 können mit Hilfe des Computers 15 zusätzlich auch beispielsweise weitere Auswertungen vorgenommen werden, wie die Kostenkalkulation, Zeitpläne, Bestell-Listen, Risikoanalysen, Maschinenplanung, Materialflußplanung od.dgl.

## Patentansprüche

1. Vorrichtung zur automatischen Herstellung von wenigstens einseitig mit Kabelendstücken versehenen Kabeln, dadurch gekennzeichnet, daß wenigstens ein Halte- und Schwenkkopf (23,24) vorgesehen ist, dem Kabelmaterial mittels einer Kabelzuführungseinrichtung (19) zugeführt wird, daß seitlich zur Bewegungsbahn (17) wenigstens ein Halte- und Schwenkkopf vorgesehen ist, dem Kabelmaterial mittels einer Kabelzuführungseinrichtung zugeführt wird, daß seitlich zur Bewegungsbahn (17) des Kabelmaterials durch die Vorrichtung wenigstens eine Crimp-Einrichtung (25, 26) zum Anbringen der Kabelendstücke an das jeweilige, durch den Halte- und Schwenkkopf (23, 24) zu dieser Crimp-Einrichtung (25, 26) hin geschwenkte Kabelende angeordnet ist, und daß an der Bewegungsbahn (17) weiterhin eine Ablängeinrichtung zum Abschneiden des durch die Kabelzuführungseinrichtung (19 ) entsprechend der gewünschten Kabellänge weitertransportierten Kabelmaterials sowie eine Längenmeßeinrichtung (20) für das entlang der Bewegungsbahn (17) geführte Kabelmaterial vorgesehen sind.

2. Vorrichtung nach Anspruch 1, dadurch gekennzeichnet, daß Kabelmaterial mit unterschiedler Farbe und/oder mit unterschiedlichem Leiterquerschnitt in einem Kabelspeicher (12) angeordnet und nach Bedarf der Bewegugnsbahn manuell oder automatisch zuführbar ist.

3. Vorrichtung nach Anspruch 1 oder 2, dadurch gekennzeichnet, daß die Kabelzuführungseinrichtung (19) eine dem Halte- und Schwenkkopf (23, 24) in der Bewegungsbahn (17) vorgeschaltete Vorschubeinrichtung für das Kabelmaterial besitzt.

4. Vorrichtung nach Anspruch 3,dadurch gekennzeichnet, daß die Vorschubeinrichtung der Kabelzuführungseinrichtung das Kabelmaterial umgreifende und von einer Antriebseinrichtung angetriebene Transportrollen oder -bänder besitzt.

5. Vorrichtung nach einem der vorhergehenden Ansprüche, dadurch gekennzeichnet, daß der Längenmeßeinrichtung (20) oder dem Halte- und Schwenkkopf (23, 24) eine Kabelrichtstecke (18) zur linearen Ausrichtung des Kabelmaterials vorgeschaltet ist.

6. Vorrichtung nach einem der vorhergehenden Ansprüche, dadurch gekennzeichnet, daß ein zweiter Halte- und Schwenkkopf (24) dem ersten Halte- und Schwenkkopf (23) in der Bewegungsbahn (17) nachgeschaltet ist, wobei zum Anbringen von Kabelendstücken am jeweils anderen Kabelende eine zweite Crimp-Einrichtung (26) neben der Bewegungsbahn (17) im Schwenkbereich des zweiten Halte- und Schwenkkopfes (24), insbesondere an der gegenüber der ersten Crimp-Einrichtung (25) gegenüberliegenden Seite, angeordnet ist.

7. Vorrichtung nach Anspruch 6, dadurch gekennzeichnet, daß die wenigstens eine Crimp-Einrichtung (25, 26) jeweils schräg zur Bewegungsbahn (17) für das Kabelmaterial angeordnet ist.

8. Vorrichtung nach Anspruch 6 oder 7, dadurch gekennzeichnet, daß die Ablängeinrichtung im zweiten Halte- und Schwenkkopf (24) integriert oder neben diesem angeordnet ist.

9. Vorrichtung nach einem der vorhergehenden Ansprüche, dadurch gekennzeichnet, daß wenigstens ein Halte- und Schwenkkopf, insbesondere der zweite Halte- und Schwenkkopf (24), mit einer Abisoliereinrichtung für die Kabelenden versehen ist.

10. Vorrichtung nach einem der vorhergehenden Ansprüche, dadurch gekennzeichnet, daß die wenigstens eine Crimp-Einrichtung (25, 26) mit einer Speichereinrichtung für gleichartige oder unterschiedliche Kabelendstücke versehen ist.

11. Vorrichtung nach einem der vorhergehenden Ansprüche, dadurch gekennzeichnet, daß eine Rinne (27) oder ein separater Speicher zum Ablegen der fertigen Kabel vorgesehen ist, der insbesondere am Ende der Bewegungsbahn (17) neben oder unter dieser angeordnet ist.

12. Vorrichtung nach Anspruch 11, dadurch gekennzeichnet, daß eine Kabelbündelungseinrichtung (28) der Rinne (27) oder dem separaten Speicher zur Bildung von Kabelbündeln aus einer vorbestimmten Anzahl und Art von fertigen Kabeln zugeordnet ist.

13. Vorrichtung nach einem der vorhergehenden Ansprüche, dadurch gekennzeichnet, daß seitlich an der Bewegungsbahn (17) eine Druck- oder Prägeeinrichtung (22) für Kabelbezeichnungen angeordnet ist.

14. Vorrichtung nach einem der vorhergehenden Ansprüche, dadurch gekennzeichnet, daß ein Computer (15) zur automatischen Steuerung des Arbeitsablaufs vorgesehen ist, insbesondere zur Steuerung des wenigstens einen Halte- und Schwenkkopfes (23, 24), der wenigstens einen Crimp-Einrichtung (25, 26), der Kablzuführungseinrichtung (19) und der Ablängeinrichtung in Abhängigkeit der Meßwerte der Längenmeßeinrichtung (20).

15. Vorrichtung nach Anspruch 14, dadurch gekennzeichnet, daß der Computer (15) zusätzlich zur Steuerung der Kabelmaterial zuführung aus dem Kabelspeicher (12), der Druck- oder Prägeeinrichtung (22) und/oder der Kabelbündelungseinrichtung (28) vorgesehen ist.

16. Vorrichtung nach Anspruch 14 oder 15, dadurch gekennzeichnet, daß der Computer (15) mit einer Eingabeeinrichtung für CAD-Darstellungen von mit Kabeln und/oder Kabelbündeln zu versehenden Anordnungen von elektrischen Komponenten oder entsprechend bestückten Schaltschränken (29) versehen ist, daß Mittel zur optimalen Berechnung der Anzahl und Längen, vorzugsweise auch der Art der jeweils erforderlichen Kabel oder Kabelbündel (34) vorgesehen sind und daß Mittel zur automatischen Steuerung des Arbeitsablaufs in Abhängigkeit der vorgenommenen Berechnung vorgesehen sind.

17. Vorrichtung nach Anspruch 16, dadurch gekennzeichnet, daß eine Speichereinrichtung für Daten über Dimensionierungen und/oder Anschlußkonfigurationen der verschiedenen elektrischen Komponenten zur Berücksichtigung bei der Berechnung der Kabel vorgesehen ist.

18. Vorrichtung nach Anspruch 16 oder 17, gekennzeichnet durch eine Ausgabeeinrichtung für Listen der zu fertigenden Kabel und/oder Kabelbündel mit entsprechenden Längen- und Spezifizierungsangaben.
